# EUROPÄISCHE PATENTSCHRIFT

(11) **EP 3 629 361 B1**
(45) Veröffentlichungstag und Bekanntmachung des Hinweises auf die Patenterteilung: **28.10.2020**
(21) Anmeldenummer: 18196848.8
(22) Anmeldetag: 26.09.2018
(51) Int. Cl.: H01J 35/08

(54) **RÖNTGENSTRAHLER, VERWENDUNG EINES RÖNTGENSTRAHLERS UND VERFAHREN ZUR HERSTELLUNG EINES RÖNTGENSTRAHLERS**
X-RAY EMITTER, USE OF AN X-RAY EMITTER AND METHOD FOR PRODUCING AN X-RAY EMITTER
ÉMETTEUR DE RAYONS X, EMPLOI D'UN ÉMETTEUR DE RAYONS X ET PROCÉDÉ DE FABRICATION D'UN ÉMETTEUR DE RAYONS X

(43) Veröffentlichungstag der Anmeldung: 01.04.2020
(60) Teilanmeldung: 20184903.1
(73) Patentinhaber: Siemens Healthcare GmbH, 91052 Erlangen (DE)
(72) Erfinder: Fritzler, Anja, 91052 Erlangen (DE); Geithner, Peter, 91058 Erlangen (DE); Maurer, Petra, 91336 Heroldsbach (DE); Streller, Brigitte, 96117 Lichteneiche (DE); Weber, Thomas, 91353 Hausen (DE)

(56) Entgegenhaltungen:
- CN-A- 101 465 260
- DE-A1- 10 360 018

## Beschreibung

Die Erfindung betrifft einen Röntgenstrahler und ein Verfahren zur Herstellung eines Röntgenstrahlers.

Röntgenstrahler sind aus dem Stand der Technik in unterschiedlichen Ausführungen hinlänglich bekannt. Im Allgemeinen liegt zwischen einer Kathode und einer Röntgenanode des Röntgenstrahlers eine Potentialdifferenz an, so dass die von der Kathode emittierten Elektronen in Richtung der Röntgenanode beschleunigt werden. Die Elektronen beaufschlagen die Röntgenanode im Bereich des Brennflecks und werden dabei unter Emission von Röntgenstrahlung, insbesondere Bremsstrahlung, abgebremst. Die Röntgenanode kann beispielsweise stationär als sogenannte Stehanode mit typischerweise im Wesentlichen mittig angeordneter Kathode ausgeführt oder um eine Rotationsachse drehbar sein. Durch eine Drehung um die Rotationsachse wird der durch Beaufschlagung mit Elektronen thermisch beanspruchte Bereich effektiv vergrößert. Derartige Röntgenstrahler weisen somit Drehanoden auf, bei der die Kathode typischerweise mittig über der von den Elektronen beaufschlagten Brennbahn angeordnet ist, oder sind als Drehkolbenstrahler (auch: Drehkolben-Röhre) ausgeführt.

Bei letzterer Bauform ist die Röntgenanode Teil eines drehbar gelagerten Gehäuses, welches typischerweise eine Taillierung (auch: Röntgentaille) aufweist. Die Kathode ist bei solchen Drehkolbenstrahlern im Wesentlichen mittig über der Röntgenanode angeordnet, welche dazu ausgelegt ist, in einem randseitigen Bereich mit Elektronen beaufschlagt zu werden. Die hierzu nötige Ablenkung bzw. Fokussierung der kathodenseitig emittierten Elektronen erfolgt beispielsweise durch einen magnetischen Quadrupol.

Aufgrund dieser konstruktiven Auslegung von Drehkolbenstrahlern und der Tatsache, dass ab der Taillierung ein feldfreier Raum herrscht, folgt, dass die Elektronen im Allgemeinen in einem flachen Auftreffwinkel auf die Oberfläche der Röntgenanode auftreffen. Dies hat zur Folge, dass die Rückstreurate relativ hoch ist, so dass insbesondere ein seitlich angeordnetes Austrittsfenster für Röntgenstrahlung von nahezu ungebremsten Elektronen getroffen werden kann. Die auf das Austrittsfenster auftreffenden Elektronen produzieren dort Röntgenstrahlung, die als Extrafokalstrahlung insbesondere die Bildqualität von erzeugten Röntgenbildern mindert.

Aus DE 10 2011 083 413 A1 ist ferner eine Röntgenanode mit einem gitterähnlich strukturierten Bereich bekannt, der dazu ausgelegt ist, die durch die insbesondere zyklische Temperaturbelastung verursachten Spannungen im Material zu reduzieren. Röntgenstrahler mit strukturierten Röntgenanoden sind weiterhin aus DE 103 60 018 A1 oder CN 101 465 260 A bekannt.

Vor diesem Hintergrund stellt sich die vorliegende Erfindung zur Aufgabe, Röntgenstrahler mit verbesserter Strahlungscharakteristik anzugeben.

Hinsichtlich der Vorrichtung wird die vorstehend genannte Aufgabe gelöst durch einen Röntgenstrahler mit den Merkmalen des Anspruchs 1.

Hinsichtlich des Verfahrens wird die vorstehend genannte Aufgabe gelöst durch ein Verfahren zur Herstellung eines Röntgenstrahlers mit den Merkmalen des Anspruchs 15.

Vorteilhafte Ausgestaltungen der Erfindung sind Gegenstand der Unteransprüche.

Ein Röntgenstrahler weist eine Röntgenanode mit einer zur Beaufschlagung mit Elektronen vorgesehenen, strukturierten Oberfläche auf. Gemäß der Erfindung weist die strukturierte Oberfläche eine zumindest abschnittsweise periodisch alternierende Oberflächenstruktur auf, die hinsichtlich ihrer Tiefenausdehnung und Periodizität im Mikrometerbereich variiert. Die Tiefenausdehnung und die Periodizität der periodisch alternierenden Oberflächenstruktur betragen weniger als 40µm. Die Tiefenausdehnung und/oder die Periodizität liegen bzw. liegt im Bereich der mittleren freien Elektronenweglänge im Material der Röntgenanode.

Die Tiefenausdehnung und die Periodizität beträgt besonders bevorzugt weniger als 25µm beträgt.

Unter der Wendung, dass die strukturierte Oberfläche eine zumindest abschnittsweise periodisch alternierende Oberflächenstruktur aufweist, soll insbesondere verstanden werden, dass diese ein periodisch alternierendes Querschnittsprofil aufweist. Bei tellerförmig ausgebildeten Röntgenanoden (auch: Anodenteller) kann sich das periodisch alternierende Querschnittsprofil insbesondere in radialer Richtung erstrecken.

Es hat sich gezeigt, dass die Oberflächenstrukturierung sowohl den Auftreffwinkel der Elektronen -und damit auch die Rückstreurate der Elektronen - als auch den Auftreffort der Elektronen beeinflusst. Simulationsergebnisse insbesondere bei Drehkolbenstrahlern zeigen, dass geeignete Oberflächenstrukturierungen in bevorzugten Ausgestaltungen eine Reduktion der Extrafokalstrahlung von bis zu 75% im Vergleich zu herkömmlichen Röntgenanoden mit glatten Oberflächen bewirken können.

Es wurde festgestellt, dass darüber hinaus ein erhöhter Photonenfluss mit derartig strukturierten Oberflächen erzeugt werden konnte. Die Steigerung des Photonenflusses beträgt in etwa 20%, in besonders bevorzugten Ausführungen bis zu 35% im Vergleich zu herkömmlichen Röntgenanoden mit glatten Oberflächen. Es wird mehr Leistung im Brennfleck bzw. in der Brennbahn deponiert, wobei dort auch grundsätzlich bei gleicher Belastung etwas höhere Temperaturen erreicht werden. Die signifikante Leistungssteigerung hinsichtlich des Photonenflusses geht jedoch ohne zusätzliche Belastung des Röntgenstrahlers einher und kann vorteilhafterweise insbesondere dazu genutzt werden, die Lebensdauer der verwendeten Komponenten deutlich zu erhöhen.

Alternativ oder zusätzlich kann zu höheren Strahlungsintensitäten übergegangen werden, um einer bessere und versatilere Bildgebung zu ermöglichen. In diesem Zusammenhang ist zu betonen, dass eine Erhöhung der Photonenausbeute, d. h. die Anzahl der Photonen, die insbesondere für die medizinische Bildgebung verwendet werden kann, bislang eine Erhöhung der Röntgenleistung erforderlich machte. Problematisch ist dabei, dass die thermische Last entsprechend steigt. Dies hat zu Folge, dass man bei vielen heutzutage handelsüblich erhältlichen Röntgenstrahlern bereits an der thermischen Belastungsgrenze angekommen ist. Mit anderen Worten ermöglicht die vorliegende Erfindung auch, Röntgenstrahler mit deutlich erhöhter Effizienz zu konstruieren oder die Verwendung von leistungsschwächeren Hochspannungsgeneratoren ohne entsprechende Einbußen bei der emittierten Photonenintensität des Röntgenstrahlers hinnehmen zu müssen.

Die Steigerung der Photonenausbeute ist abhängig vom Auftreffwinkel, in dem die Elektronen auf die Anodenoberfläche im Bereich eines Brennpunktes beispielsweise einer Stehanode oder - insbesondere bei Drehanoden oder Drehkolbenstrahler - einer Brennbahn auftreffen. Da die Einfallrichtung der Elektronen auf der Anodenoberfläche im Wesentlichen bauartbedingt vorgegeben ist, ist auch die Steigerung der Photonenausbeute bauartbedingt unterschiedlich. Es hat sich insbesondere gezeigt, dass bei einem Auftreffwinkel der Elektronen von etwa 20° mit einer Steigerung der Photonenausbeute von etwa 30% zu rechnen ist. Bei einer herkömmlichen Auslegung des Röntgenstrahlers mit glatter Anodenoberfläche müsste entsprechend die Leistung des Hochspannungsgenerators um 20%, beispielsweise von 100kW auf 120kW erhöht werden, um die gleiche Photonenausbeute zu erreichen. Dies hätte eine entsprechende Erhöhung der thermischen Belastung zur Folge.

In Ausgestaltungen ist vorgesehen, dass die Variation der Tiefenausdehnung und/oder Periodizität der periodisch alternierende Oberflächenstruktur im Bereich der mittleren freien Elektronenweglänge liegt. Unter der Wendung, dass die Tiefenausdehnung und Periodizität im Bereich der mittleren freien Elektronenweglänge liegen, ist insbesondere zu verstehen, dass die Tiefenausdehnung und Periodizität der Größenordnung nach im Bereich der mittleren freien Elektronenweglänge im Material der Röntgenanode liegen. Die freie Elektronenweglänge ist insbesondere von der kinetischen Energie der Elektronen abhängig. Die konkrete Auslegung der strukturierten Oberflächen der Röntgenanode ist somit für Röntgenstrahler unterschiedlicher Spannungen verschieden. Wenn die Tiefenausdehnung und Periodizität der periodisch alternierenden Oberflächenstruktur insbesondere im jeweiligen Bereich der mittleren freien Elektronenweglänge liegen, kann ein breiter Leistungsbereich abgedeckt werden.

Zur Realisierung einer hinsichtlich ihrer Tiefenausdehnung und/oder Periodizität variierenden Oberflächenstrukturierung kann die strukturierte Oberfläche beispielsweise entsprechend dimensionierte nadelförmige Strukturen aufweisen.

In Ausgestaltungen ist vorgesehen, dass die alternierende Oberflächenstruktur zumindest abschnittsweise parallel zueinander verlaufende Rillen umfasst. Die Oberflächenstruktur ist insbesondere nur hinsichtlich einer Erstreckungsrichtung periodisch. Die zumindest abschnittsweise parallel zueinander verlaufenden Rillen erstrecken sich insbesondere in nichtradialer Richtung, sind beispielsweise durchgängig ausgebildet und weisen in Ausgestaltungen eine konstante oder variierende Tiefausdehnung auf. Die Tiefausdehnung der Rillen kann in verschiedenen Ausgestaltungen insbesondere periodisch variieren. Letztere Ausbildung ist insbesondere vorteilhaft hinsichtlich der Minimierung von thermischem Stress.

In verschiedenen Ausführungsbeispielen weist die Röntgenanode, eine umlaufende, beispielsweise rotationssymmetrische Gestalt auf. Die Rillen verlaufen insbesondere schräg zu einer radialen Richtung, die von der umlaufenden bzw. rotationssymmetrischen Gestalt der Röntgenanode vorgegeben wird.

In Ausgestaltungen ist vorgesehen, dass die alternierende Oberflächenstruktur umlaufende, kreisförmige Rillen umfasst. Derartige Ausbildungen können bei allen gängigen Anodentypen, also insbesondere bei Stehanoden, Drehanoden oder Drehkolbenstrahler vorgesehen sein.

In Ausgestaltungen ist vorgesehen, dass die umlaufenden, kreisförmigen Rillen zueinander konzentrisch angeordnet sind. Die Röntgenanode ist beispielsweise tellerförmig ausgestaltet, so dass das Zentrum der umlaufenden, kreisförmigen Rillen insbesondere mit dem Zentrum der tellerförmig ausgebildeten Röntgenanode zusammenfallen kann. Derartige tellerförmige Röntgenanoden sind beispielsweise als Drehanoden ausgebildet oder als Teil eines Drehkolbenstrahlers mit rotierendem Vakuumgehäuse vorgesehen.

In Ausgestaltungen ist vorgesehen, dass das Verhältnis von Tiefenausdehnung und Periodizität der alternierenden Oberflächenstruktur im Wesentlichen 1:1 beträgt.

Bei Röntgenanoden für die Mammographie und anderen Anwendungen ist gegebenenfalls davon auszugehen, dass eine optimal angepasste, maximale Tiefenausdehnung der alternierenden Oberflächenstruktur bzw. die Rillentiefe unterhalb von 10 µm liegt.

Bevorzugt ist vorgesehen, die maximale Variation der Tiefenausdehnung in Abhängigkeit der kV-Klasse des Röntgenstrahlers zu wählen. Röntgenanoden für die medizinische Strahlentherapie weisen somit eine Oberflächenstrukturierung mit einer anderen Tiefenvariation auf, wie beispielsweise Röntgenanoden für die Mammographie.

Das Querschnittsprofil der alternierenden Oberflächenstruktur weist eine Ausdehnung auf, die im Bereich der mittleren freien Weglänge der Elektronen und der Absorptionslänge der emittierten Photonen liegt und kann an sich eine nahezu beliebige Gestalt aufweisen. Beispielsweise umfasst die alternierende Oberflächenstruktur eine Grabenstruktur mit steilen Wänden, die insbesondere mittels Laserablation in das Material der Röntgenanode eingebracht sind.

In Ausgestaltungen ist vorgesehen, dass die alternierende Oberflächenstruktur im Querschnitt ein im Wesentlichen sinusförmig verlaufendes Profil, im Wesentlichen ein Rechteckprofil oder im Wesentlichen ein Sägezahnprofil aufweist. Die Herstellung derartiger Strukturen ist vereinfacht, wenn diese mittels Laserablation erzeugt werden können.

In Ausgestaltungen ist vorgesehen, dass die Tiefenausdehnung und/oder Periodizität der alternierenden Oberflächenstruktur weniger als 30µm, bevorzugt weniger als 20µm beträgt.

In Ausgestaltungen ist vorgesehen, dass die alternierende Oberflächenstruktur mittels lokaler Abtragung, insbesondere mittels eines Ablationsverfahrens, beispielsweise mittels Laserablation oder Elektronenstrahlablation in das Material der Röntgenanode eingebracht ist. Bei derartigen Ablationsverfahren wird in der Regel ein hochenergetischer Strahl auf die Oberfläche des zu strukturierenden Bauteils gerichtet und gezielt Material abgetragen. Derartige Verfahren sind dazu geeignet, Strukturierungen im Mikrometerbereich mit hoher Präzision zu erzeugen. Dabei können insbesondere unregelmäßige, gekrümmte und/oder kegelige Oberflächen schnell, präzise und kostengünstig strukturiert werden. Als mechanische und/oder chemische Ablationsverfahren kommen die Mikrostrukturbearbeitung, beispielsweise Mikrofräsen, die Mikrosenkerosion und Ätzverfahren mit vorheriger Kaschierung bzw. Maskierung der Brennbahn in Betracht.

In Ausgestaltungen ist vorgesehen, dass die alternierende Oberflächenstruktur mittels eines generativen Fertigungsverfahrens (auch: additive Fertigungsverfahren), insbesondere mittels selektiven Laserschmelzen, selektiven Lasersintern, selektiven Elektronenstrahlschmelzen hergestellt ist.

In Ausgestaltungen ist vorgesehen, dass die alternierende Oberflächenstruktur mittels Fused Filament Fabrication, Kaltgasspritzen, Siebdruck oder mittels Beschichtungsverfahren, insbesondere mittels chemischer Gasphasenabscheidung (chemical vapor deposition, CVD) oder physikalischer Gasphasenabscheidung (physical vapor deposition, PVD) hergestellt ist.

Ein Röntgenstrahler gemäß der Erfindung weist eine der vorstehend beschriebenen Röntgenanoden mit strukturierter Oberfläche auf. Die damit einhergehenden Vorteile ergeben sich unmittelbar aus der bisherigen Beschreibung mit Bezug auf die strukturierte Röntgenanode. Insbesondere weist ein derartig ausgebildeter Röntgenstrahler eine Strahlungscharakteristik mit reduzierter Extrafokalstrahlung auf. Dies steigert insbesondere die Bildqualität von erfassten Röntgenbildern. Zudem kann die Strahlenexposition einer Person, insbesondere eines Patienten bei Anwendungen in der Medizin verringert werden. Da die Oberflächenstrukturierung der Röntgenanode des Weiteren eine höhere Ausbeute an Photonen bewirkt, kann beispielsweise zudem zu niedrigeren Leistungen bei im Wesentlichen gleichbleibender emittierter Röntgenintensität übergegangen werden. Daraus resultiert eine Reduktion der thermischen Belastung, so dass die Lebensdauer des Röntgenstrahlers erhöht ist.

In Ausgestaltungen ist vorgesehen, dass die Röntgenanode um eine Rotationsachse drehbar ist. Mit anderen Worten weist der Röntgenstrahler beispielsweise eine Drehanode auf oder ist als Drehkolbenstrahler ausgeführt. In hierzu alternativen Ausführungen ist die Röntgenanode als Stehanode ausgeführt.

In Ausgestaltungen weist der Röntgenstrahler eine derartige konstruktive Auslegung auf, dass Elektronen auf die strukturierte Oberfläche im Wesentlichen in einem Auftreffwinkel von bis zu 90°, bevorzugt in einem Auftreffwinkel von weniger als 60°, besonders bevorzugt weniger als 50°, insbesondere in einem Auftreffwinkel weniger als 45° auftreffen. Ein derartig flacher Auftreffwinkel der Elektronen hat im Allgemeinen eine relativ hohe Rückstreurate zur Folge. Diese hohe Rückstreurate kann zumindest zum größten Teil dadurch kompensiert werden, dass im Bereich des Brennflecks oder -bei rotierenden Röntgenanoden- im Bereich der Brennbahn die Röntgenanode mit der vorstehend beschriebenen strukturierten Oberfläche versehen ist. Der minimale Auftreffwinkel kann beispielsweise in etwa 1° betragen.

Vorzugsweise findet der vorstehend beschriebene Röntgenstrahler Verwendung zur Erzeugung von Röntgenbildern. Die Oberflächenstruktur der Röntgenanode ist insbesondere dazu ausgelegt, bildqualitätsmindernde Extrafokalstrahlung zu minimieren. Dies kann vorteilhaft bei sämtlichen auf Röntgenstrahlung basierenden Bildgebungsverfahren genutzt werden, insbesondere bei der Computertomographie, Mammographie, Angiographie, Fluoroskopie oder bei der Materialprüfung.

In Ausgestaltungen wird die erzeugte Röntgenstrahlung für die Bildgebung, beispielsweise für die medizinische Bildgebung, für die Strahlentherapie, für die Materialprüfung oder für die Frachtgutkontrolle bereitgestellt. Der Röntgenstrahler findet beispielsweise Verwendung in einem C-Bogenröntgengerät, einem Computertomographen, einer Röntgeneinrichtung der Mammographie oder Angiographie oder in einer anderen Röntgeneinrichtung der medizinischen Bildgebung.

Es hat sich gezeigt, dass ein flacher Auftreffwinkel der Elektronen in Kombination mit einer oberflächenstrukturierten Röntgenanode zu einer Erhöhung der Photonenausbeute führt, die bereits der Größenordnung nach bei etwa 35% liegt. Allerdings durchläuft das Spektrum bei einem derartig flachen Auftreffwinkel eine geringe Vorfilterung, die bei einem steileren Einfall, d. h. bei einem Auftreffwinkel der Elektronen, der größer ist als 60°, entfällt. Die effektive Steigerung der Photonenausbeute kann daher bei einem Auftreffwinkel jenseits der oben genannten 60° noch größer ausfallen.

Bei einem Verfahren zur Herstellung eines Röntgenstrahlers mit einer der vorstehend genannten Röntgenanoden wird die alternierende Oberflächenstruktur mittels eines Ablationsverfahrens, insbesondere mittels Laserablation oder Elektronenstrahlablation in das Material der Röntgenanode eingebracht. In einer alternativen Ausgestaltung des Herstellungsverfahrens wird die alternierende Oberflächenstruktur mittels eines generativen Fertigungsverfahrens, insbesondere mittels selektivem Laserschmelzen, Lasersintern, Elektronenstrahlschmelzen und/oder mittels Fused Filament Fabrication, Kaltgasspritzen, Siebdruck oder mittels eines Beschichtungsverfahrens, insbesondere mittels chemischer Gasphasenabscheidung oder physikalischer Gasphasenabscheidung hergestellt. In Ausgestaltungen kann die alternierende Oberflächenstruktur auch durch eine beliebige Kombination der vorstehend beschriebenen Verfahren gebildet werden. Insbesondere kann vorgesehen sein, Kombinationen von additiven und subtraktiven Verfahren vorzusehen. Für eine weitere Beschreibung der Erfindung wird auf das in den Zeichnungsfiguren gezeigte Ausführungsbeispiel verwiesen. Es zeigen in einer schematischen Darstellung:
- Fig. 1:: den schematischen Aufbau eines Drehkolbenstrahlers in einer Schnittdarstellung,
- Fig. 2:: eine nichtmaßstabsgetreue Darstellung des Drehkolbenstrahlers im Querschnitt;
- Fig. 3:: eine nichtmaßstabsgetreue Darstellung eines Abschnitts einer Röntgenanode mit Oberflächenstrukturierung;
- Fig. 4:: eine nichtmaßstabsgetreue Darstellung der Röntgenanode mit Oberflächenstrukturierung in einer Draufsicht.

Einander entsprechende Teile sind in allen Figuren mit den gleichen Bezugszeichen versehen.

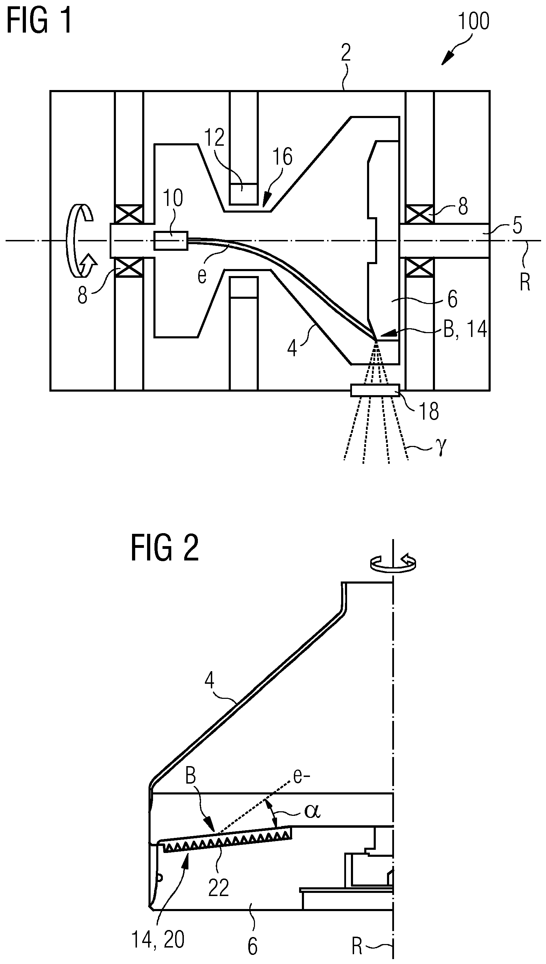

Figur 1 zeigt einen als Drehkolbenstrahler ausgeführten Röntgenstrahler 100 mit einem innerhalb eines Gehäuses 2 in Lagern 8 drehbar gelagerten Vakuumgehäuse 4. Das Gehäuse 2 ist typischerweise mit einem flüssigen Kühlmittel, insbesondere mit einem Kühlöl gefüllt oder füllbar, so dass das im Betrieb rotierende Vakuumgehäuse 4 direkt von Kühlmittel umströmt wird. Das Vakuumgehäuse 4 kann beispielsweise über eine Welle 5 in eine Drehbewegung um die Rotationsachse R versetzt werden.

Ein Teil des Vakuumgehäuses 4 ist von einer tellerförmig ausgebildeten Röntgenanode 6 gebildet, welche einen randseitigen, zur Beaufschlagung mit Elektronen e vorgesehenen Bereich aufweist. Zwischen der Röntgenanode 6 und einer Kathode 10 liegt eine Hochspannung an, so dass die Kathode 10 im Betrieb Elektronen e emittiert, die in Richtung der Röntgenanode 6 beschleunigt werden. Dabei lenkt eine Ablenkeinrichtung 12, die insbesondere mehrere magnetische Ablenkspulen umfasst, die Elektronen e auf eine geeignete Trajektorie, so dass diese im Bereich des Brennflecks B auf die Oberfläche 14 der Röntgenanode 6 auftreffen.

Die Ablenkeinrichtung 12 ist beispielsweise als magnetischer Dipol ausgeführt und im Bereich einer Taillierung 16 des Vakuumgehäuses 4 angeordnet. Da der Bereich zwischen der Taillierung 16 und der Röntgenanode 6 im Wesentlichen feldfrei ist, treffen die Elektronen bei einer derartigen Ausführung in einem relativ kleinen Auftreffwinkel α auf die Oberfläche 14 der Röntgenanode 6 auf.

Beim Auftreffen der Elektronen e auf die Röntgenanode 6 entstehen in an sich bekannter Weise Röntgenstrahlen γ**.** Die Röntgenstrahlen γ verlassen das Gehäuse 2 des Röntgenstrahlers 100 über ein Austrittsfenster 18. Dem Austrittsfenster 18 können weitere, nicht näher dargestellte Einrichtungen zur Strahlformung, wie etwa ein Blendenkasten oder ein Kollimator nachgeschaltet sein.

Der im Bereich des Brennflecks B von Elektronen e beaufschlagte Bereich der Oberfläche 14 weist eine Oberflächenstrukturierung im Mikrometerbereich auf. Die Oberflächenstruktur 20 der strukturierten Oberfläche 14 ist schematisch in den nicht maßstabsgetreuen Abbildungen der Figuren 2 bis 4 dargestellt.

Fig. 2 zeigt den Abschnitt des bezüglich der Rotationsachse R rotationssymmetrisch ausgebildeten Vakuumgehäuses 4 jenseits der Taillierung 16. Die Darstellung der Oberflächenstruktur 20 ist zur besseren Illustration stark vergrößert dargestellt. Bei einer maßstabsgetreuen Darstellung wäre die Oberflächenstruktur 20, die ein periodisch alternierendes Profil im Mikrometerbereich aufweist, nicht zu erkennen.

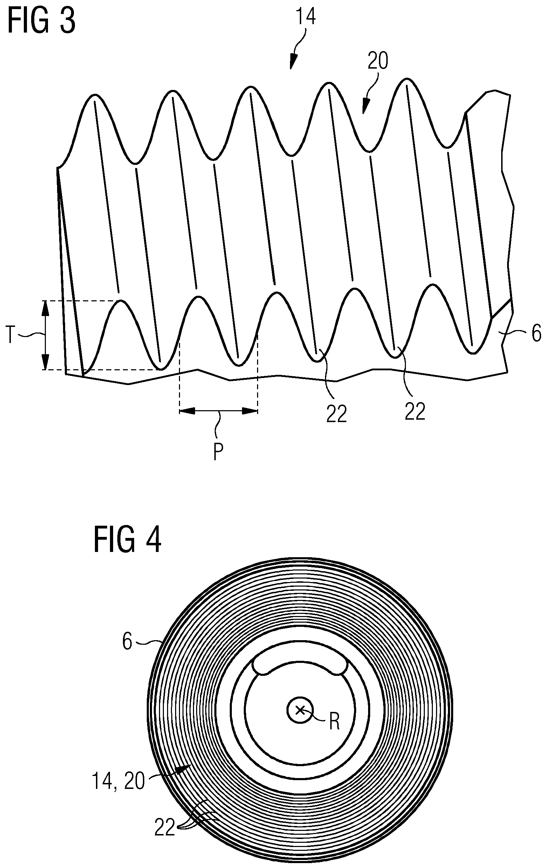

Die periodisch alternierende Oberflächenstruktur 20 ist außerdem im Detail in der nicht maßstabgetreuen Figur 3 und in der Draufsicht in der nicht maßstabgetreuen Figur 4 gezeigt.

In der in Figuren 2 bis 4 exemplarisch gezeigten Ausgestaltung umfasst die periodisch alternierende Oberflächenstruktur 20 mehrere Rillen 22, die zueinander als konzentrische Kreise eine umlaufende Oberflächenstrukturierung im randseitigen Bereich der Röntgenanode 6 bilden. Beispielsweise sind die Rillen 22 wie bei einer Schallplatte ausgebildet. In der Draufsicht (Fig. 4) fällt der Mittelpunkt der konzentrischen kreisförmigen Rillen 22 mit der Rotationsachse R zusammen.

Im Querschnitt hat die Oberflächenstruktur 20 in etwa ein sinusförmiges Profil (vgl. Fig. 3) mit einer Periodizität P und einer Tiefenausdehnung T. Sowohl die Periodizität P (oder: Periodenlänge) als auch die Tiefenausdehnung T liegt im Mikrometerbereich. In dem lediglich zur Illustration dargestellten und nicht einschränkend aufzufassendem Ausführungsbeispiel beträgt das Verhältnis zwischen Tiefenausdehnung T und der Periodizität von etwa 1:1. Insbesondere beträgt sowohl die Tiefenausdehnung T als auch die Periodizität P in etwa 15µm.

Mit einer derartig strukturierten Röntgenanode 6 lässt sich insbesondere bei einem flachen Elektroneneinfall (vgl. Fig. 2) der Anteil der gestreuten Elektronen e in Einfallrichtung reduzieren. Dieser Effekt kann in vorteilhafter Weise bei Röntgenanoden 6 unterschiedlicher Bauart, also insbesondere auch bei Drehanoden oder Stehanoden ausgenutzt werden. Besonders vorteilhaft kann dies jedoch bei Drehkolbenstrahler genutzt werden, um den intrinsischen, d. h. bauartbedingten Nachteil auszugleichen, der sich aus einem flachem Auftreffwinkel α der Elektronen e mit der damit verbundenen hohen Rückstreurate ergibt. Die Oberflächenstruktur 20 der Röntgenanode 6 reduziert insbesondere den Anteil der gestreuten Elektronen e, der das Austrittsfenster 18 trifft und reduziert somit die von gestreuten Elektronen e verursachte, bildqualitätsmindernde Extrafokalstrahlung.

Innerhalb der Rillen 22 bzw. der Senken der strukturierten Oberfläche 14 ist mit einer erhöhten Spannungskonzentration zu rechnen, die durch die thermische Belastung der Röntgenanode 6 während des Betriebs des Röntgenstrahlers 100 verursacht ist. Es bietet sich an, innerhalb der Rillen 22 bzw. der Senken einen möglichst großen Krümmungsradius vorzusehen, um einer plastischen Verformung der Röntgenanode 6 entgegenzuwirken. Es wäre denkbar, dass sich an diesen Stellen Entspannungsrisse bilden, die allerdings die Funktion der Rillen 22 im Allgemeinen zumindest nicht maßgeblich beeinflussen. Insbesondere ist wohl davon auszugehen, dass derartige Risse keine oder nur eine geringe Verringerung der Dosis bewirken würden, zumindest im Vergleich zu glatten Anodenoberflächen, die diesbezüglich Alterungserscheinungen aufweisen können.

Obwohl die Erfindung im Detail mit Bezug auf das bevorzugte Ausführungsbeispiel näher illustriert und beschrieben wurde, so ist die Erfindung nicht hierdurch eingeschränkt. Andere Variationen und Kombinationen können vom Fachmann hieraus abgeleitet werden, ohne vom wesentlichen Gedanken der Erfindung abzuweichen. Insbesondere können strukturierte Oberflächen 14 bei Röntgenanoden 6 unterschiedlicher Bauart vorgesehen werden, um Extrafokalstrahlung zu minimieren und/oder die Photonenausbeute bei gleichbleibender Leistung zu erhöhen.

## Patentansprüche

1. Röntgenstrahler (100), umfassend eine Röntgenanode (6) mit einer zur Beaufschlagung mit Elektronen (e) vorgesehenen, strukturierten Oberfläche (14), wobei die strukturierte Oberfläche (14) eine zumindest abschnittsweise periodisch alternierende Oberflächenstruktur (20) aufweist, die hinsichtlich ihrer Tiefenausdehnung (T) variiert, wobei die Tiefenausdehnung (T) und die Periodizität (P) der periodisch alternierenden Oberflächenstruktur (20) weniger als 40µm betragen und **dadurch gekennzeichnet, dass** die Tiefenausdehnung (T) und/oder die Periodizität (P) im Bereich der mittleren freien Elektronenweglänge im Material der Röntgenanode liegen bzw. liegt.

2. Röntgenstrahler (100) nach Anspruch 1, **dadurch gekennzeichnet, dass** die alternierende Oberflächenstruktur (20) zumindest abschnittsweise parallel zueinander verlaufende Rillen (22) umfasst.

3. Röntgenstrahler (100) nach Anspruch 2, **dadurch gekennzeichnet, dass** die Röntgenanode (6) eine umlaufende, beispielsweise rotationssymmetrische Gestalt aufweist und die Rillen (22) schräg zu einer radialen Richtung verlaufen, die von der umlaufenden, beispielsweise rotationssymmetrischen, Gestalt der Röntgenanode vorgegeben wird.

4. Röntgenstrahler (100) nach einem der vorhergehenden Ansprüche, **dadurch gekennzeichnet, dass** die alternierende Oberflächenstruktur (20) umlaufende, kreisförmige Rillen (22) umfasst.

5. Röntgenstrahler (100) nach Anspruch 4, **dadurch gekennzeichnet, dass** die kreisförmigen Rillen (22) zueinander konzentrisch angeordnet sind.

6. Röntgenstrahler (100) nach einem der vorhergehenden Ansprüche, **dadurch gekennzeichnet, dass** das Verhältnis von Tiefenausdehnung (T) und Periodizität (P) der alternierenden Oberflächenstruktur (20) im Wesentlichen 1:1 beträgt.

7. Röntgenstrahler (100) nach einem der vorhergehenden Ansprüche, **dadurch gekennzeichnet, dass** die alternierende Oberflächenstruktur (20) im Querschnitt ein im Wesentlichen sinusförmig verlaufendes Profil, im Wesentlichen ein Rechteckprofil oder im Wesentlichen ein Sägezahnprofil aufweist.

8. Röntgenstrahler (100) nach einem der vorhergehenden Ansprüche, **dadurch gekennzeichnet, dass** die Tiefenausdehnung (T) und/oder Periodizität (P) der alternierenden Oberflächenstruktur (20) weniger als 40µm, bevorzugt weniger als 30µm, besonders bevorzugt weniger als 20µm beträgt.

9. Röntgenstrahler (100) nach einem der vorhergehenden Ansprüche, **dadurch gekennzeichnet, dass** die alternierende Oberflächenstruktur (20) mittels eines Ablationsverfahrens, insbesondere mittels Laserablation, Elektronenstrahlablation, Mikrostrukturbearbeitung, Mikrosenkerosion und/oder eines Ätzverfahrens in das Material der Röntgenanode (6) eingebracht ist.

10. Röntgenstrahler (100) nach einem der vorhergehenden Ansprüche, **dadurch gekennzeichnet, dass** die alternierende Oberflächenstruktur (20) mittels eines generativen Fertigungsverfahrens, insbesondere mittels selektivem Laserschmelzen, Lasersintern, Elektronenstrahlschmelzen hergestellt ist.

11. Röntgenstrahler (100) nach einem der vorhergehenden Ansprüche, **dadurch gekennzeichnet, dass** die alternierende Oberflächenstruktur mittels Fused Filament Fabrication, Kaltgasspritzen, Siebdruck oder mittels eines Beschichtungsverfahrens, insbesondere mittels chemischer Gasphasenabscheidung oder physikalischer Gasphasenabscheidung, hergestellt ist.

12. Röntgenstrahler (100) nach einem der vorhergehenden Ansprüche, **dadurch gekennzeichnet, dass** die Röntgenanode (6) um eine Rotationsachse (R) drehbar ist.

13. Röntgenstrahler (100) nach einem der vorhergehenden Ansprüche, **gekennzeichnet durch** eine konstruktive Auslegung des Röntgenstrahlers (100) derart, dass Elektronen (e) auf die strukturierte Oberfläche (14) im Wesentlichen in einem Auftreffwinkel (α) von bis zu 90°, bevorzugt in einem Auftreffwinkel (α) von weniger als 60°, besonders bevorzugt weniger als 50°, insbesondere in einem Auftreffwinkel (α) von maximal etwa 45° auftreffen.

14. Verwendung eines Röntgenstrahlers (100) nach einem der vorhergehenden Ansprüche zur Erzeugung von Röntgenbildern.

15. Verfahren zur Herstellung eines Röntgenstrahlers (100) nach einem der Ansprüche 1 bis 13 mit einer Röntgenanode (6), wobei die alternierende Oberflächenstruktur (20) mittels eines Ablationsverfahrens, insbesondere mittels Laserablation oder Elektronenstrahlablation in das Material der Röntgenanode eingebracht wird oder mittels eines generativen Fertigungsverfahrens, insbesondere mittels selektivem Laserschmelzen, Lasersintern, Elektronenstrahlschmelzen oder mittels Fused Filament Fabrication, Kaltgasspritzen, Siebdruck oder mittels eines Beschichtungsverfahrens, insbesondere mittels chemischer Gasphasenabscheidung oder physikalischer Gasphasenabscheidung, hergestellt wird.

## Claims

1. X-ray emitter (100), comprising an x-ray anode (6) with a structured surface (14) provided for impingement with electrons (e), wherein the structured surface (14) has a surface structure (20) which alternates periodically at least in sections, which varies in respect of its depth extension (T), wherein the depth extension (T) and the periodicity (P) of the periodically alternating surface structure (20) is less than 40µm and **characterised in that** the depth extension (T) and/or the periodicity (P) is in the range of the average free electron path length in the material of the x-ray anode.

2. X-ray emitter (100) according to claim 1, **characterised in that** the alternating surface structure (20) comprises channels (22) which run in parallel to one another at least in sections.

3. X-ray emitter (100) according to claim 2, **characterised in that** the x-ray anode (6) has a circumferential, for instance rotationally symmetrical form and the channels (22) run obliquely to a radial direction which is determined by the circumferential, for instance rotationally symmetrical design of the x-ray anode.

4. X-ray emitter (100) according to one of the preceding claims, **characterised in that** the alternating surface structure (20) comprises circumferential, circular channels (22).

5. X-ray emitter (100) according to claim 4, **characterised in that** the circular channels (22) are arranged concentrically with respect to one another.

6. X-ray emitter (100) according to one of the preceding claims, **characterised in that** the ratio of depth extension (T) and periodicity (P) of the alternating surface structure (20) is essentially 1:1.

7. X-ray emitter (100) according to one of the preceding claims, **characterised in that** the alternating surface structure (20) has an essentially sinusoidal profile in cross-section, essentially a rectangular profile or essentially a sawtooth profile.

8. X-ray emitter (100) according to one of the preceding claims, **characterised in that** the depth extension (T) and/or periodicity (P) of the alternating surface structure (20) is less than 40µm, preferably less than 30µm, particularly preferably less than 20µm.

9. X-ray emitter (100) according to one of the preceding claims, **characterised in that** the alternating surface structure (20) is introduced into the material of the x-ray anode (6) by means of an ablation method, in particular by means of laser ablation, electron beam ablation, microstructure machining, micro die sinking and/or an etching method.

10. X-ray emitter (100) according to one of the preceding claims, **characterised in that** the alternating surface structure (20) is produced by means of an additive manufacturing method, in particular by means of selective laser melting, laser sintering, electron beam melting.

11. X-ray emitter (100) according to one of the preceding claims, **characterised in that** the alternating surface structure is produced by means of fused filament fabrication, gas dynamic cold spraying, screen printing or by means of a coating method, in particular by means of chemical vapor deposition or physical vapor deposition.

12. X-ray emitter (100) according to one of the preceding claims, **characterised in that** the x-ray anode (6) can be rotated about an axis of rotation (R).

13. X-ray emitter (100) according to one of the preceding claims, **characterised by** a structural design of the x-ray emitter (100) such that electrons (e) strike the structured surface (14) essentially at an angle of impact (α) of up to 90°, preferably at an angle of impact (α) of less than 60°, particularly preferably less than 50°, in particular at an angle of impact of at most approximately 45°.

14. Use of an x-ray emitter (100) according to one of the preceding claims for generating x-ray images.

15. Method for producing an x-ray emitter (100) according to one of claims 1 to 13 with an x-ray anode (6), wherein the alternating surface structure (20) is introduced into the material of the x-ray anode by means of an ablation method, in particular by means of laser ablation or electron beam ablation or is produced by means of an additive manufacturing method, in particular by means of selective laser melting, laser sintering, electron beam melting or by means of fused filament fabrication, gas dynamic cold spraying, screen printing or by means of a coating method, in particular by means of chemical vapor deposition or physical vapor deposition.

## Revendications

1. Emetteur (100) de rayons X, comprenant une anode (6) à rayons X ayant une surface (14) structurée et prévue pour être soumise à des électrons (e), dans lequel la surface (14) structurée a une structure (20) de surface alternant périodiquement, au moins par endroit, dont l 'étendue (T) en profondeur varie, l 'étendue (T) en profondeur et la périodicité (P) de la structure (20) de surface alternant périodiquement étant de moins de 40µm et **caractérisé en ce que** l'étendue (T) en profondeur et /ou la périodicité (P) sont ou est dans la plage de la longueur de parcours libre moyenne des électrons dans le matériau de l'anode à rayons X.

2. Emetteur (100) de rayons X suivant la revendication 1, **caractérisé en ce que** la structure (20) de surface en alternance comprend, au moins par endroit, des rainures (22) s'étendant parallèlement entre elles.

3. Emetteur (100) de rayons X suivant la revendication 2, **caractérisé en ce que** l'anode (6) à rayons X a une forme faisant le tour, par exemple de révolution, et les rainures (22) sont inclinées par rapport à une direction radiale prescrite par la forme faisant le tour, par exemple de révolution, de l'anode à rayons X.

4. Emetteur (100) de rayons X suivant l'une des revendications précédentes, **caractérisé en ce que** la structure (20) de surface en alternance comprend des rainures (22) circulaires faisant le tour.

5. Emetteur (100) de rayons X suivant la revendication 4, **caractérisé en ce que** les rainures (22) circulaires sont disposées concentriquement les unes par rapport aux autres.

6. Emetteur (100) de rayons X suivant l'une des revendications précédentes, **caractérisé en ce que** le rapport de l'étendue (T) en profondeur par la périodicité (P) de la structure (20) de surface en alternance est sensiblement de 1:1.

7. Emetteur (100) de rayons X suivant l'une des revendications précédentes, **caractérisé en ce que** la structure (20) de surface en alternance a, en section transversale, un profil s'étendant sensiblement sinusoïdalement, sensiblement un profil rectangulaire ou sensiblement un profil en dent de scie.

8. Emetteur (100) de rayons X suivant l'une des revendications précédentes, **caractérisé en ce que** l 'étendue (T) en profondeur et /ou la périodicité (P) de la structure (20) de surface en alternance est de moins de 40 µm, de préférence de moins de 30 µm, d'une manière particulièrement préférée de moins de 20 µm.

9. Emetteur (100) de rayons X suivant l'une des revendications précédentes, **caractérisé en ce que** la structure (20) de surface en alternance est obtenue au moyen d'un procédé d'ablation, notamment au moyen d'une ablation laser, d'une ablation par faisceau d'électrons, d'un usinage de microstructure, d'une micro -érosion et /ou un procédé d'attaque du matériau de l'anode (6) à rayons X.

10. Emetteur (100) de rayons X suivant l'une des revendications précédentes, **caractérisé en ce que** la structure (20) de surface en alternance est produite au moyen d'un procédé de fabrication génératif, notamment au moyen d'une fusion laser sélective, d'un frittage laser, d'une fusion par faisceau d'électrons.

11. Emetteur (100) de rayons X suivant l'une des revendications précédentes, **caractérisé en ce que** la structure de surface en alternance est produite au moyen d 'une fused filament fabrication, d'une pulvérisation par gaz froid, d'une sérigraphie ou au moyen d'un procédé de revêtement, notamment au moyen d'un dépôt chimique en phase gazeuse ou d'un dépôt physique en phase gazeuse.

12. Emetteur (100) de rayons X suivant l'une des revendications précédentes, **caractérisé en ce que** l'anode (6) à rayons X peut tourner autour d'un axe (R) de rotation.

13. Emetteur (100) de rayons X suivant l'une des revendications précédentes, **caractérisé par** une conception constructive de l'émetteur (100) de rayons X de manière à ce que des électrons (e) arrivent sur la surface (14) structurée sensiblement suivant un angle (α) d'incidence allant jusqu 'à 90°, de préférence suivant un angle (α) d 'incidence de moins de 60°, d'une manière particulièrement préférée de moins de 50°, notamment suivant un angle (α) d 'incidence d'environ 45° au maximum.

14. Utilisation d'un émetteur (100) à rayons X suivant l 'une des revendications précédentes, pour produire des images de rayons X.

15. Procédé de fabrication d'un émetteur (100) à rayons X suivant l'une des revendications 1 à 13, comprenant une anode (6) à rayons X, la structure (20) de surface en alternance étant produite au moyen d'un procédé d 'ablation, notamment au moyen d'une ablation laser ou d 'une ablation par faisceau d'électrons, du matériau de l 'anode à rayons X ou au moyen d'un procédé de fabrication génératif, notamment au moyen d'une fusion laser sélective, d'un frittage laser, d'une fusion par faisceau d'électrons ou au moyen d'un fused filament fabrication, d'une pulvérisation par gaz froid, d'une sérigraphie ou au moyen d'un procédé de revêtement, notamment au moyen d 'un dépôt chimique en phase gazeuse ou d'un dépôt physique en phase gazeuse.
